# EUROPEAN PATENT SPECIFICATION

(11) **EP 0 646 100 B1**
(45) Date of publication and mention of the grant of the patent: **25.06.1997**
(21) Application number: 92924087.7
(22) Date of filing: 18.11.1992
(51) Int. Cl.: C04B 28/06

(54) **PLASTER AND/OR PAINT PRODUCT**
PUTZ- UND ODER FARBEPRODUKT
PRODUIT A BASE D'ENDUIT OU DE PEINTURE

(30) Priority: 18.11.1991 SE 9103392; 20.01.1992 SE 9200144
(43) Date of publication of application: 05.04.1995
(73) Proprietor: Optiroc AB, 191 29 Sollentuna (SE)
(72) Inventor: HATZIANTONIOU, Vasilis, S-703 75 Örebro (SE)
(74) Representative: Rackette, Karl, Dipl.-Phys. Dr.-Ing
(86) International application number: SE9200790
(87) International publication number: WO9310054

(56) References cited:
- EP-A- 0 211 365
- GB-A- 1 336 017

## Description

The present invention relates to a rendering and/or colour finish product for use on a facade or similar surface and containing a hydraulic mineral binding agent.

Surface finishing products of the aforementioned kind intended to be applied to facades or other similar surface-shaped substrates have in principle always involved the use of lime as a binding agent for the products in question. Cement, such as Portland cement, has also been used as a binding agent more recently.

Pure air-hardening lime binds in such a way that it carbonizes through the effect of the air, and the binding process thus proceeds slowly, especially during cold and damp weather.

Cement binds chemically with water, by a process known as hydration, and this results in a more reliable binding process with better adhesion and strength compared with lime.

The problems which unfortunately arise as a result of using these mineral binding agents are well-known, however, namely the risk of lime precipitation when binding agents containing cement are used. Such white lime precipitates can noticeably discolour facades and other surfaces to which the product is applied, although this has nothing to do with the strength and the service life of the rendering and is entirely an aesthetic and particularly troublesome problem. Lime precipitates can occur, for example, if the facade, etc., in question is exposed to heavy rain after completion and will arise especially in cold and damp weather conditions during the autumn. The reason is that portlandite, which is readily soluble in water, is formed as the cement sets. In the presence of a high water content and/or rapid evaporation, this lime can be transported rapidly to the surface of the surface rendering and can be deposited on it through precipitation of the lime, resulting in troublesome white colouration of the surface of the rendering. The same problem also applies to colour finishes of the aforementioned kind.

Due to the fact that rendering is now carried out mechanically for the most part, more water is used in the mixes in order to make them capable of spray application, when the problem referred to above becomes even more noticeable.

Said previously disclosed binding agents are also sensitive to various forms of suction from the substrate and the method of applying the material. This can lead to the result not being satisfactory, and to the occurrence of troublesome patchiness and other colour irregularities.

The advantages of using mineral binding agents are nevertheless very considerable, including a particular area of application on substrates such as KC rendering, concrete, brick and lightweight concrete.

Moisture is able to pass from the substrate in liquid form, and there is thus no concentration of moisture beneath the surface layer which is based on this type of binding agent. This characteristic also permits refurbishment to a high standard. Because moisture is not trapped beneath the product in question, but is open to the air, rainwater and other moisture are observed by the rendering, etc., and are given up to the surrounding air when the weather improves. Moisture such as damp indoor air or building moisture is able to escape, i.e. to diffuse, from the inside of the building, etc., through the wall and to condense in the rendering layer, from where it makes its way to the surface through capillary action and dries out.

Attempts have been made to eliminate or, at least, to reduce the above problem by using organic binding agents. However, this produces characteristics which can be extremely damaging to the facades, etc., in the longer term. Damage in the form of flaking and frost damage in the rendering layer regrettably occur all too often.

The facades of buildings must be maintained, and new coats of colour finish and/or surface rendering must continue to be applied during the life of the building. It is very important on these occasions to be able to apply mineral surface layers, so that the moisture balance of the facade does not change. If a surface layer with an organic binding agent is used, the risk of adversely affecting the moisture balance will be high.

It is thus an object of the present invention to develop a facade colour finish/surface rendering based on a mineral cement binding agent which does not suffer from the disadvantages set out above, first and foremost with regard to solving the lime precipitation problems, but which in other respects must exhibit similar characteristics and advantages to previous products, so that the surface layer can function in a satisfactory manner as an exposed face for a very long time with the building materials referred to above.

Said object is achieved by means of a product in accordance with the present invention, which is characterized essentially in that rapid-binding binding agents in the form of aluminous cement, preferably Lafarge® SEC 71, are present in the product at a level of 5-30 percent by weight and filler at a level of 60-95 per cent by weight, and in that the binding process for the product, in spite of the rapid-binding characteristics of the binding agent, is regulated and adapted to a slow-binding system with a view to utilizing only the non-lime-generating characteristics of the binding agent in order to eliminate lime precipitation.

The invention is described below as a number of preferred illustrative embodiments, in conjunction with which reference is made to the accompanying drawing, in which:
Fig. 1 shows a diagrammatic sectioned view of a 3-layer rendering; and
Fig. 2 shows a diagrammatic sectioned view of a 3-layer colour finish.

A rendering and/or colour finish product 1, which is intended for use on a facade 2 or some other appropriate similar surface, contains a new hydraulic binding agent which is not combined with, for example, a standard type of such binding agents such as lime or Portland cement in order to prevent or, at least, to reduce the risk of the occurrence of lime precipitation in particular with efflorescence as a result, but also other disadvantages of the kind referred to above which have been encountered previously. According to the invention rapid-binding binding agents in the form of aluminous cement in a certain quantity are combined with a number of different fillers, similarly in a certain quantity.

Aluminous cement, which is known not to be a uniform and specific chemical compound, but a cement with a high but varying content of Al₂O₃, is used preferably in the form of the type Lafarge® SEC 71, although other types of aluminous cement may also be used.

The rapid-binding binding agent in the form of aluminous cement is present at a level of 5-30 per cent by weight.

A number of substances of the type dolomite, calcite, feldspar, sand, pearlite, wollastonite and cenospheres can be included as filler. The filler represents between 60 and 95 per cent by weight of the intended product 1, for example 60-85 per cent by weight, but preferably 70-92 per cent by weight.

The physical characteristics of the substances present in the product are controlled by additives which involve and extend the open time, the so-called "pot life" of the product and which control the setting process for the product 1.

According to the invention the binding process obtained for said rendering and/or colour finish product is arranged to take place slowly, in spite the fact that the binding agent normally exhibits rapid-binding characteristics. The characteristics of the binding agent, such as the lack of or, at least, the resulting slow rate of precipitation of lime, are also fully utilized in order to eliminate or, at least, to reduce the precipitation of lime in the rendering and/or colour finish product in question, i.e. the binding process of the rendering and/or colour finish product in question has been regulated and adapted, in spite of the rapid-binding characteristics of the binding agent, to produce a slow-binding system with a view to utilizing only the non-lime-generating characteristics of the binding agent in order to eliminate lime precipitation.

The binding time for the whole system is regulated and extended through the invention by means of additives, i.e. retarders and accelerators, in order to utilize the non-lime-generating characteristics of the Al cement, although not its accelerating characteristics, for application in colour finishes and/or renderings. It is thus not the rapid-binding characteristics of the Al cement, but rather its non-lime-generating characteristics, that are used.

According to the invention a binding agent system with a purely Al cement system, and not a mixture with Portland cement, gypsum or technical-grade lime, for example, has been produced, in which the Al cement and in particular *ciment fondu* (melted aluminous cement) act as accelerators, i.e. produce a rapid-binding effect. If Al cement is used on its own, no rapid-binding effect is produced and the binding time is approximately the same as for standard Portland cement.

It cannot, therefore, be regarded as obvious to achieve the desired result through said mixture by resorting to means which on their own produce the opposite result to said desired result.

SU-A-1221-863 relates to a fireproof concrete composition with an aluminium oxide cement (alumina cement), whereas SU-A-1627-534 relates to a charge for a fireproof thermally insulating concrete with a high aluminium oxide content (alumina content).

Both the aforementioned previously disclosed products relate to materials which are required to withstand high temperatures, for example inside furnaces, and the problem of lime precipitation is of no significance whatsoever here, for which reason the invention cannot be regarded as having been derived from it.

EP-A1-0 211 365 relates to a quick-setting cement containing aluminate, amongst other things, which can be used for the production of rendering, for example, although all similarity with the present invention ceases at that point.

Aluminous cement, which normally exhibits rapid-binding characteristics, functions in the present product 1 with the opposite reaction, i.e. the binding process is so slow that no problems arise in connection with the application of the product 1 along the intended facade 2 or some other similar surface. The other characteristics of the binding agent, such as the resulting absence of lime precipitation, or at least its occurrence at only a low level, can thus be utilized in full.

It is consequently surprising to find that the opposite reaction occurs to what one might normally expect from using the rapid-binding binding agent, i.e. that the binding process is now sufficiently slow to permit the application of the product to the intended surface 2 instead of the expected rapid binding process.

The product 1 also contains additives which control the physical characteristics like that the open time is extended and the setting process is controlled for the product 1 respectively.

A number of said substances of the type titanium dioxide, dry plastic, methyl cellulose, lithium carbonate and trisodium citrate can be included as additives. The volumetric ratio of said substances in the product may, in the event of the presence of the same substance or the same substances, be such that titanium dioxide accounts for 4-6.5 per cent by weight, dry plastic accounts for 2-4 per cent by weight, methyl cellulose accounts for 0.8-1.5 per cent by weight, lithium carbonate accounts for 0.01-0.03 per cent by weight. Finally, trisodium citrate accounts for 0.19-0.57 per cent by weight.

In addition, anti-foaming agents may also be included in the product 1 at the level of 0.1-0.3 per cent by weight.

The binding process is optimally controlled by means of the various additives so that an enduring product 1 is obtained in the form of facade rendering and/or a surface colour finish in which the precipitation of lime and salts (efflorescence) is minimized, and equally so that patchiness is avoided and the so-called pot life of the product is involved and extended.

Considerable advantages are gained in this way with the new product in accordance with the present invention in relation to, amongst other things, the facade colour finish binding agents based on organic binding agents which have been used until now, for example of the acrylate type.

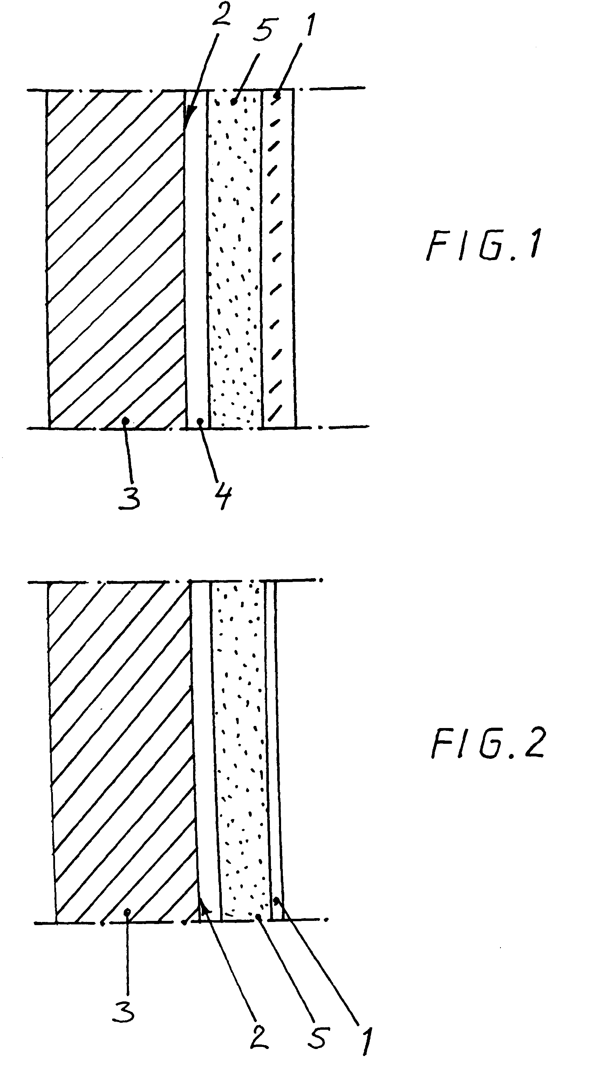

Shown in Fig. 1 in relation to the construction of a 3-layer facade on the surface 2 of a wall 3, for example, is a layer 4 of primer coat and a further layer 5 consisting of coarse rendering situated on top of the layer 4 of primer coat. Finally, the product 1 in accordance with the invention, i.e. the surface rendering, is applied last on top of the aforementioned layers 4, 5 outside the surface 2, and moisture is able to pass unhindered through the wall, etc., 3 in spite of the applied surface rendering, etc., 1.

Shown in Fig. 2 is a product in the form of a surface colour finish 1 over a coarse rendering 5, a layer 4 of primer coat and an application surface 2, for example on a masonry wall 3 made of concrete blocks, lightweight clinker/Leca®, brick or lightweight concrete, etc.

The overall composition of a product may comprise the following:
A) Aluminous cement, preferably of the type Lafarge® SEC 71, at a level of 5-30 percent by weight
B) filler of the type:
   a) dolomite
   b) calcite
   c) feldspar
   d) sand
   e) pearlite
   f) wollastonite
   g) cenospheres
with an overall composition at a level of 60-95 per cent by weight.
C) Titanium dioxide at a level of 4.0 - 6.5 % by weight
D) Dry plastic at a level of 2.0 - 4.0 % by weight
E) Methyl cellulose at a level of 0.8 - 1.5 % by weight
F) Lithium carbonate at a level of 0.01 - 0.03 % by weight
G) Trisodium citrate at a level of 0.19 - 0.57 % by weight
H) Anti-foaming agent at a level of 0.1 - 0.3 % by weight

The invention is not restricted, however, to the embodiments described above and illustrated in the drawing, but may be varied within the scope of the Patent Claims without departing from the idea of invention. For example, the percentage by weight of aluminous cement, preferably of the previously indicated kind, accounts for 15-30 percent by weight, and the percentage by weight of filler accounts for 60-95 per cent by weight, if said intended product is a rendering product or similar quite thick product for surface application.

## Claims

1. Rendering and/or colour finish product (1) for use on a facade (2) or similar surface and containing a hydraulic mineral binding agent, ***characterized in that*** the product contains a rapid-binding binding agent in the form of aluminous cement, preferably Lafarge ® SEC 71, at a level of 5-30 percent by weight and filler at a level of 60-95 per cent by weight, in that the binding process for the product, in spite of the normally rapid-binding characteristics of the binding agent, is slowed down, and in that the characteristics of the binding agent such as the lack of or, at least, the resulting low precipitation of lime, is fully utilized in order to eliminate or, at least, to reduce lime precipitation in the product in question (1).

2. Product according to Patent Claim 1, ***characterized in that*** a number of substances of the type dolomite, calcite, feldspar, sand, pearlite, wollastonite and cenospheres are included as filler.

3. Product according to any of the Patent Claims 1-2, ***characterized in that*** additives which extend the open time are also included.

4. Product according to any of the Patent Claims 1-3, ***characterized in that*** additives which control the setting process of the product are also included.

5. Product according to any of the Patent Claims 3-4, ***characterized in that*** a number of substances of the type titanium dioxide, dry plastic, methyl cellulose, lithium carbonate and trisodium citrate are included as additives.

6. Product according to Patent Claim 5, ***characterized in that:***
Titanium dioxide is present at 4.0 - 6.5 % by weight
Dry plastic is present at 2.0 - 4.0 % by weight
Methyl cellulose is present at 0.8 - 1.5 % by weight
Lithium carbonate is present at 0.01 - 0.03 % by weight
Trisodium citrate is present at 0.19 - 0.57 % by weight

7. Product according to any of the foregoing Patent Claims, ***characterized in that*** anti-foaming agents are present in the product (1) at a level of 0.1-0.3 per cent by weight.

8. Product according to any of the foregoing Patent Claims, ***characterized in that*** the percentage by weight of rapid-binding binding agents is 15-30, and that the percentage by weight of filler is 60-95.

## Patentansprüche

1. Putz und/oder Farhprodukt (1) zum Einsatz auf einer Fassade (2) oder einer ähnlichen Oberfläche mit einem Hydromineralbindemittel **dadurch gekennzeichnet**, daß das Produkt ein schnell abbindendes Bindemittel in der Gestalt eines Aluminatzementes, vorzugsweise Lafarge SEC 71, zu einem Gehalt von 5 bis 30 Gewichtsprozent und eine Füllmasse zu einem Gehalt von 60 bis 95 Gewichtsprozent enthält, daß der Abbindeprozeß für das Produkt trotz seiner normalerweise schnellen Abbindeeigenschaften verlangsamt ist, und daß die Eigenschaften des Bindemittels wie das Fehlen oder zumindest das geringe Ausscheiden von Kalk vollständig umgesetzt wird, um das Ausscheiden von Kalk in dem betreffenden Produkt (1) zu vermeiden oder zumindest zu vermindern.

2. Produkt nach Anspruch 1, dadurch gekennzeichnet, daß eine Anzahl von Substanzen als Füllmasse verwendet werden, die dem Typ Dolomit, Doppelspat, Feldspat, Sand, Perlit, Wollastonit und Cenospheren entsprechen.

3. Produkt nach Anspruch 1 oder Anspruch 2, dadurch gekennzeichnet, daß Additive hinzugefügt sind, die die offene Zeit verlängern.

4. Produkt nach einem der Ansprüche 1 bis 3, dadurch gekennzeichnet, daß Additive hinzugefügt sind, die den Setzungsprozeß des Produktes steuern.

5. Produkt nach einem der Ansprüche 3 oder 4, dadurch gekennzeichnet, daß eine Anzahl von Substanzen als Additive verwendet werden, die dem Typ Titandioxid, Trockenkunststoff, Methylzellulose, Lithiumkarbonat und Trinatriumcitrat entsprechen.

6. Produkt nach Anspruch 5, dadurch gekennzeichnet, daß Titandioxid zu 4,0 bis 6,5 Gewichtsprozent, Trockenkunststoff zu 2,0 bis 4,0 Gewichtsprozent, Methylzellulose zu 0,8 bis 1,5 Gewichtsprozent, Lithiumkarbonat zu 0,01 bis 0,03 Gewichtsprozent und Trinatriumcitrat zu 0,19 bis 0,57 Gewichtsprozent verwendet werden.

7. Produkt nach einem der vorstehenden Ansprüche, dadurch gekennzeichnet, daß in dem Produkt (1) Antitreibmittel zu einem Gehalt zwischen 0,1 bis 0,3 Gewichtsprozent enthalten sind.

8. Produkt nach einem der vorstehenden Ansprüche, dadurch gekennzeichnet, daß schnell abbindende Bindemittel zu einem Gehalt von 15 bis 30 Gewichtsprozent und Füllmasse zu einem Gehalt von 60 bis 95 Gewichtsprozent enthalten ist.

## Revendications

1. Enduit et/ou produit de finition coloré (1) pour utilisation sur une façade (2) ou une surface analogue, et contenant un liant minéral hydraulique, caractérisé en ce que le produit contient un liant à prise rapide sous forme d'un ciment alumineux, de préférence le Lafarge® SEC 71, en une quantité de 5 à 30 pourcent en poids, et des charges en une quantité de 60 à 95 pourcent en poids, en ce que le processus de prise du produit, malgré les caractéristiques de prise normalement rapide du liant, est ralenti, et en ce que les caractéristiques du liant, comme par exemple l'absence de précipitation de chaux, ou au moins la faible précipitation de chaux qui en résulte, sont entièrement utilisées pour éliminer ou au moins réduire la précipitation de la chaux dans le produit considéré (1).

2. Produit selon la revendication 1, caractérisé en ce qu'un certain nombre de substances sont incorporées en tant que charges, du type dolomite, calcite, feldspath, sable, perlite, wollastonite et cénosphères.

3. Produit selon l'une quelconque des revendications 1-2, caractérisé en ce que sont aussi incorporés des additifs qui augmentent le temps ouvert.

4. Produit selon l'une quelconque des revendications 1-3, caractérisé en ce que sont aussi incorporés des additifs qui régulent le processus de prise du produit.

5. Produit selon l'une quelconque des revendications 3-4, caractérisé en ce que sont incorporées en tant qu'additifs un certain nombre de substances du type dioxyde de titane, plastique sec, méthylcellulose, carbonate de lithium et citrate trisodique.

6. Produit selon la revendication 5, caractérisé en ce que le dioxyde de titane est présent en une quantité de 4,0 à 6,5 % en poids, le plastique sec en une quantité de 2,0 à 4,0 % en poids, la méthylcellulose en une quantité de 0,8 à 1,5 % en poids, le carbonate de lithium en une quantité de 0,01 à 0,03 % en poids, le citrate trisodique en une quantité de 0,19 à 0,57 % en poids.

7. Produit selon l'une quelconque des revendications précédentes, caractérisé en ce que des agents anti-moussants sont présents dans le produit (1) en une quantité de 0,1 à 0,3 % en poids.

8. Produit selon l'une quelconque des revendications précédentes, caractérisé en ce que le pourcentage en poids des liants à prise rapide est de 15 à 30, et que le pourcentage en poids de la charge est de 60 à 95.
